# EUROPEAN PATENT APPLICATION

(11) **EP 4 033 428 A1**
(43) Date of publication of application: **27.07.2022**
(21) Application number: 21153510.9
(22) Date of filing: 26.01.2021
(51) Int. Cl.: G06Q 10/08, G06Q 10/10

(54) **SYSTEM AND METHOD FOR MANAGING ITEMS, CONTAINERS AND ENTITIES**

(71) Applicant: Jakubicek, Paul, 15000 Praha 5 (CZ)
(72) Inventor: Jakubicek, Paul, 15000 Praha 5 (CZ)
(74) Representative: Hartvichova, Katerina

(57) **Abstract**

The present invention relates to a system and a method for managing inventors of goods, containers and entities, wherein
- the system contains a plurality of entities, wherein at least one entity controls at least one item,
- the system contains at least one item folder, wherein one item folder corresponds to one item, and said item folder and said corresponding item are designated by a unique identifier,
- the system contains at least one container folder, wherein one container folder corresponds to one container, and said container folder and said corresponding container are designated by a unique identifier,
- each entity has means for creating a folder structure corresponding to physical grouping of item(s) and/or container(s),
- each entity is equipped by means for making accessible to other entities at least one item folder corresponding to an item, or at least one container folder corresponding to a container, said item or said container being controlled by the entity,
- each entity has means for adding a file containing information about handling of an item by the entity into the item folder, optionally also a file containing an information about handling of a container by the entity into the container folder.

## Description

### Field of Art

The present invention provides a system and method for managing inventory of items, such as goods, wherein the system and method allow to achieve a more effective management of inventory, to improve the reliability of the inventory, and to track history of each item.

### Background Art

There are many methods for managing inventory of goods, which are all based on the system of adding the quantity of inbound items to the stock of the items of the relevant type, and subtracting the quantity of outbound items from the stock of the items of the relevant type. The current systems and methods for managing inventory do not have room for considering and tracking the history of individual items. This results in further problems: integrity of stock levels is easily modified in error, it is almost impossible to handle and track containers holding the goods, especially because they also differ in sizes or may contain various types of goods. Logical separation between the stock that is in the process and the process itself is missing in current methods.

Maintaining a record of goods and tracking goods throughout and between businesses is currently done by using the inventory system as a model of the physical goods. This means that a record of ownership and the location of the goods and transfer of goods is recorded in a table or tables where the type of item is listed and in a corresponding column, the quantity of that item is listed. When items are added to a business' ownership in an inbound process, the quantity of the goods are added to the stock of the items of the relevant type. This corresponding change also will eventually take place in the sender's inventory system by subtracting the quantity of outbound items from the stock of the items of the relevant type. In this manner, inventory of items is kept for a particular business. The most important component of the inventory system is the listing of the item and the corresponding quantity of items held. This is the foundation of the inventory system and it depends on the classification of items into 'types', or 'stock-keeping-units (SKU)', kept in an itemized list with corresponding quantities. When an item or group of items is transferred from one business to another business or person, then a record of the items transferred takes the form of a packing list or other similar form of documentation, typically containing an itemized list. This can be done on paper, or through electronic means.
There are many disadvantages to the inventory system of maintaining a record of physical objects. The classification of items is a subjective exercise that is done according to an individual's judgement, and most frequently according to business rules which are an institutional subjective judgement. A consequence of generalizing objects into a classification (like a Stock Keeping Unit) is the loss of information specific to that particular object. An example of information that is commonly lost about an object's provenance is its individual creator and time of creation. An example of a problematic subjective definition of a classification is the use of pre-packed 'sets' in a consumer setting, like a single package of 3 items sold as 1 item. The question of how many items are in stock becomes a complicated one with different permutations of single items and sets. Integrity of the stock numbers can also be a problem as the inventory level can be easily manipulated in error. Finally, the relationship between the physical world and the record of the stock must be maintained separately. An item can be received into the inventory of a business and a record of ownership is increased by the corresponding amount. But to maintain a record of where the item has been placed requires additional record-keeping processes.
Transferring information between parties in the supply chain is organized as needed. There is no standardized format for the transfer of information between shippers, carriers, receivers, and others with an interest in the shipments being transferred. Electronic transfer of information takes place after substantial organization when the volume goods transferred between two parties warrants the effort of defining how the information will be mapped between the two parties. Because data describing transfers is stored in tabular form, the columns must be mapped to the appropriate corresponding column for each party. The effort that must be put forth to accomplish this means that most transfers of data about products take place in manual form, with either spreadsheets being emailed, or data being transferred on physical packing slips when the data is transferred.
US 2006282342 A1 proposes image-based inventory tracking and reports based on using images as the primary key to the inventory database. The record associated with the image corresponds to the individual depicted item. However, this system can only be used for very small amounts of items, and the document does not contemplate any transfer of the items to other parties; it is limited only to building an inventory database.
US 2002111819 A1 proposes individual tagging of items or conveyances, wherein the tags are readable and allow to determine position of the tagged item or conveyance. The current location information of the tagged items is accessible in real-time. The information is aggregated to allow for the tracking of items stored in conveyances. The raw location data appear to be incomplete, and compensation logic must be used to complete the gaps in raw data. The corresponding system requires one central data center collecting the data and making the data accessible for fee-paying users. The system also does not track history of each item, and only focuses on current location data.

The present invention aims at providing a system and a method for managing inventory which allows to reliably track and record the history of individual items and obviates the drawbacks of the currently available managing inventory systems. Furthermore, the present invention addresses the problem of transfering the records relating to transferred items in a reliable way between different independent parties with varying levels of cooperation.

### Summary of the Invention

The present invention provides a system and method for managing inventory of goods which is based on managing information relating to each item separately, thus allowing keeping the record of history of each item and making it accessible to relevant users of the system, including the consumers. Furthermore, the system and method allow to transfer the information about the items together with the transfer of the items themselves, in a reliable way, while minimizing room for any errors.

The present invention provides a system for managing inventory of items, wherein
- the system contains a plurality of entities, wherein at least one entity controls at least one item,
- the system contains at least one item folder, wherein one item folder corresponds to one item, and said item folder and said corresponding item are designated by a unique identifier,
- the system contains at least one container folder, wherein one container folder corresponds to one container, and said container folder and said corresponding container are designated by a unique identifier,
- each entity has means for creating a folder structure corresponding to physical grouping of item(s) and/or container(s),
- each entity is equipped by means for making accessible to other entities at least one item folder corresponding to an item, or at least one container folder corresponding to a container, said item or said container being controlled by the entity,
- each entity has means for adding a file containing information about handling of an item by the entity into the item folder, optionally also a file containing an information about handling of a container by the entity into the container folder.

The term "item" designates one piece of goods which is produced and further handled (sold, bought, stored, shipped, etc.). An item may later on serve as a component in a more complex final product.

An item may have an item inventory, as it can be composed of several sub-items (composed item). An example of such composed item may be a box of several weight units of fruit. In this example, sub-items may be pieces of fruit or weight units of fruit. At the place of the final sale, or during re-sales, the item may be consumed in several steps, one or more sub-items per step.

The term "taxonomy" refers to a classification based on shared common parameters. For example, a parameter may be 'Color' and this parameter is specified for all items. Or a parameter may be 'Box Size' and all Boxes are classified according to this parameter.

The term "container" represents a plurality of items packed or assembled together. The items can be grouped hierarchically in several containers at once. Examples of a container are a box, a pallet, a shipment, a warehouse, a shop, a product made up of several items (e.g. a car made of individual components, or a set of individual items). Examples of a hierarchy of items in containers or hierarchy of containers are: a plurality of items in a box, a plurality of boxes on a pallet and a plurality of pallets in a shipment; or a plurality of items making up a car and a plurality of cars in a shipment. It should be noted that from the point of view of some entities, a complex product such as a car may represent a container of items (components), while from the point of view other entitites, the same complex product may represent an item. The items contained in the container may be of the same type or of various types. The term "container" also includes any persons or machines handling the items and containers, e.g., in ships or warehouses or stores. Each embodiment of an entity can define one or more types of containers according to its requirements. For example, a warehouse can define all containers that are used within that warehouse to fall within a mutually exclusive list of: 'Carton', 'Pallet', 'Location', 'Shipment' and 'User'. One container type may or may not have a Taxonomy, but if it does have a Taxonomy, that Taxonomy is unique to each container type.

The terms "lower-level container" and "higher-level container" are used as relative terms. When a first container is contained within a second container, then the first container is a lower-level container vis-a-vis the second container, and the second container is a higher-level container vis-a-vis the first container. The same relationship applies for their container folders. The container folder of the first container is a lower-level container folder vis-a-vis the container folder of the second container, and the container folder of the second container is a higher-level container folder vis-a-vis the container folder of the first container.

The term "physical grouping" and "physical division" relate to actions performed with items or containers. "Physical grouping" is a process of grouping a plurality of items into a container, or a plurality of containers (and optionally items) into a higher-level container. "Physical division" is a process of taking out items of a container and/or taking out containers from a higher-level container.

The term "entity" designates an individual or a business who manages inventory of items or participates in management of inventory of items or participates in shipping of items. An entity may have a URL address for allowing access to the system or to a part of the system.

The term "customer" refers to an individual or a company which is the final purchaser and consumer of the items.

The term "owner" refers to an external company or entity which owns, or is responsible for, items or containers. Typically, items or containers are handled on their behalf.

The term "item folder" refers to a folder corresponding to an item. An item folder is a representation of the corresponding item in the system. Each individual item has an individual folder assigned to it in within the system. Typically, the name of the folder corresponds to the designation of the item. The item and the folder are designated by a unique identifier. The folder contains at least one file. Usually, each entity which handles the item and the item folder adds at least one file into the item folder. For example, one file may contain generic name of the item and/or information about the producer and/or production of the item and/or production date of the item. Other files may contain information about the origin of the item and/or raw materials (such as: country of origin, producer, production certificates, raw material used). Other files may relate to shipping(s) and or transport(s) undergone by the item, yet other files may relate to storage(s) of the item. Yet other files may relate to change(s) of ownership of the item. Yet other files may relate to repair(s) of the item. In case of a composed item, at least one file will relate to an item inventory.

When an item enters the system, the corresponding item folder is created. This it typically done by the first entity which handles the item and which is part of the system - this may be the producer, re-seller, shipper, etc.

The term "container folder" refers to a folder corresponding to a container. A container folder is a representation of the corresponding container in the system. Each individual container has an individual folder assigned to it in within the system. Typically, the name of the folder corresponds to the designation of the container. The container and the folder are designated by a unique identifier. The folder contains at least one file. The files in the container folder typically contain information about the production, type and repairs of the container. For example, one file may contain generic name of the container and/or information about the producer and/or production of the container and/or production date of the container. Yet other files may relate to repair(s) and/or transfer(s) of the container. If the container folder relates to a person, the files typically contain name or designation of the person and information about the job designation.

When a container enters the system, the corresponding container folder is created. This it typically done by the first entity which brings the container into system.

The term "folder structure" refers to a structure of various levels of folders, in which the item folders represent the lowest-level folders. The folder structure corresponds to the physical grouping(s) of items. When items are physically grouped into a container (e.g. goods are put into a box), the corresponding item folders are moved into the corresponding container folder. When containers are physically grouped into a higher-level container (e.g., boxes are put on a pallet), the corresponding container folders are moved into the corresponding folder of the higher-level container. When a hierarchical physical groupings occurs, a corresponding hierarchical folder structure is created by moving the folders accordingly. For example, if a plurality of items are grouped into a box, and a plurality of such boxes is grouped on a pallet, then a container folder corresponding to the pallet contains sub-folders which are container folders corresponding to the boxes, each of which in turn contains sub-folders which are item folders corresponding to the items present in the relevant box. The super-folders may contain sub-folders as well as files in the root.

The term "file" corresponds to a piece of information. A file can be an electronic file or a sheet of paper. An electronic file can be in any text or document format. A file may contain information, for example, about the item or container itself and/or about the parameters of the item or container (such as size, weight, color, etc.) and/or about its production and producer and/or about entities which controlled the item or container at any time of its life and/or about shipping and/or about entities having shipped the item or container and/or about storage and/or about sale of the item and/or about repairs of the item or container.

Means for creating a folder structure may include a processor, a database, a computer, a computer system, computer memory, and/or empty paper folders and stationery items. Generally, any means allowing to create an electronic or paper folder may be used.

Means for making folders accessible to other entities may include a processor, a computer, a computer system, a server, a scanner and/or a printer. Generally, the means for making folders accessible to other entities shall allow connection of the entity to said other entities, e.g., via Internet and/or via its URL, and/or common data transmission techniques such as Electronic Data Interchange / Application Programming Interfaces, or shall allow to produce copies of the folders.

The term "item type" is a classification of items that is used when the items in an entity belong to more than one owner. Each item type has a unique taxonomy and a unique name. This taxonomy is stored in the file describing the item.

The term "control" or "control of an item" refers to possessing the item or controlling its ownership. Similarly, the term "control of a container" refers to possessing the container or controlling its ownership.

The term "handling of an item" refers to any activity done with the item, for example owning, transferring, shipping, etc. Similarly, the term "handling of a container" refers to any activity done with the container, for example owning, transferring, shipping, etc.

The term "unique identifier" may be, for example, UUID. UUID is a universally unique identifier, which is a 128-bit number which is typically used to identify information in computer systems. In some software/providers, UUID is also called GUID (globally unique identifier). UUID and GUID are treated herein as synonyms.

In particular, unique identifiers are used for items which are usually controlled or handled by a number of entities, therefore their identifiers must be unique globally. The identifiers of the containers may be unique globally (especially when it is expected that the container will be controlled or handled by a number of entities), or they may be unique locally (especially when the container remains controlled or handled only by one entity, then the container identifier needs to be unique only within the system of this particular entity).

The folders and files may be physical (e.g., paper files and paper folders) or electronic (e.g., a folder structure in a memory or in a cloud). Physical files and folders will more likely be used by small-scale entities, such as workshops or small producers, or very small shops.

It is possible to translate the physical files and folders into electronic files and folders, and vice versa. The translation of the physical files and folders into electronic files and folders may be performed by digitalization means, such as scanning and optical recognition of text (OCR). The translation of electronic files and folders into physical ones may be perfomed for example by printing.

In one preferred embodiment in which the folders and files are electronic, the system may be defined as follows:
- the system contains a plurality of entities, each entity having or corresponding to a memory which contains item folder(s) and/or container folder(s) corresponding to item(s) and/or container(s) which are presently under control of the entity;
- each entity has a URL which can be made accessible to other entities;
- each entity has a means for making accessible to other entities via the URL of the said entity at least one item folder corresponding to an item, or at least one container folder corresponding to a container, said item or said container being controlled by the entity;
- each entity has a means for adding a file containing an information about handling of an item by the entity into the item folder, optionally also a means for adding a file containing an information about handling of a container into the (root of the) container folder.

The term "memory" refers to any electronic space in which data can be held, uploaded or downloaded. It may refer to, for example, a computer memory, server memory, data field, external memory, cloud space, shared memory space.

The term "URL" (uniform resource locator) means a reference to a web resource which specifies its location on a computer network and a mechanism for retrieving it. URL is also often referred to as a web address.

The memory of an entity contains item folder(s) and/or container folder(s) corresponding to item(s) and/or container(s) which are under control of the entity, and optionally item folder(s) and/or container folder(s) corresponding to item(s) and/or container(s) which were under control of the entity in the past or are leaving the control of the entity (outbound), and which are expected to come under control of the entity (inbound).

The folder structure in the memory of an entity may be divided into organizational folders, for example the organizational folders "presently under control", "inbound / to be picked up", "was expected in the past", "was expected but not delivered in the past", and/or "outbound / dropped off"

It should be noted that a container folder may also contain folders of inbound and/or outbound items or inbound and/or outbound lower-level containers. The container folder structure, in such case, may be divided into organizational folders, for example the organizational folders "presently under control", "inbound", "outbound".

In some embodiments, the entity has a means for making available on their URL item folder(s) and/or container folder(s) of the containers and/or items which are expected to leave the control of the entity and/or which are expected to come under control of the entity.

In some embodiments, only some files contained in the folders are made available to other entities. For example, only information about the item(s) and/or container(s) and their parameters may be of interest for a shipping entity, and there is no need to make available full history of the items and/or containers to the shipping entity. Thus, only files relating to the parameters of the items and/or containers(s) may be made available to a certain entity.

In some embodiments, the specification of contents of a container is not of interest for certain entities (such as shipping entities or storage providers). Then only the container folder is made available to the entity by the controlling entity, containing only the information relating to the container, but not the folders and information relating to the items or lower-level containers contained therein.

The system of the present invention is a decentralized system. There is no need for a central database. Each entity has the item folders and container folders which are under its control (and optionally inbound and/or outbound). When the control over the items changes, the dispatching entity makes available the folders of the outbound item(s) and/or containers to the receiving entity, and optionally to the shipping entity, on the URL of the dispatching entity. Typically, the receiving entity will have access to complete folders with all files, while the shipping entity may have access to all folders, but only to some files within the folders, or only to selected folders within the folder structure. Restriction of access to files and/or folders by selected entities may be performed by means known to the skilled person. The folders and folder structure which can be downloaded by the shipping entity obviate the need for creation of separate spreadsheets, shipping slips or mapping columns in tables of the dispatching party and the receiving party. Similarly, the system of the present invention ensures that no entity has to create new spreadsheets and manually enter the information about the items and/or containers into their systems. The data are in the form in which they can be directly uploaded into the system of each entity, thus also avoiding human mistakes in entering the information manually.

In some embodiments, the entity may divide the item folders and/or the container folders into organizational folders, such as Inbound Expected (items and groupings which are expected but not yet taken under control), Inbound Evidence (items and groupings which were taken under control in the past), Root Folder (items and groupings which are currently under control), Outbound Evidence (items and groupings which were under control in the past). In these embodiments, the relationship of the entity to the items and containers is determined by which organizational folder they are within.

When a consumer of goods purchases or obtains an item, the consumer may access the corresponding item folder on the URL of the seller (store or service entity), using the unique identifier of the purchased or obtained item. The item folder contains files which allow to retrieve the history of the item. The seller may devise a system or a user interface for presenting the information contained in the files in a user-friendly form, for example uploading the information and showing the relevant locations of origin and/or handling of the goods on a map. The system may also have additional functions, such as calculation of carbon footprint etc. The seller may restrict access of the consumer to the data contained in the item folder so as to protect business sensitive information.

An item is typically labelled with the unique identifier. The label may have the form of, for example, a printed text, a 2D barcode, a 3D barcode or an RFID tag. The label may contain the unique identifier, or the unique identifier and the URL of the entity under whose control the item currently is. Navigating to the URL of the entity in combination with the unique identifier returns information about the item which is available in the folder and made accessible by the entity.

A container is typically labelled with the unique identifier. The label may have the form of, for example, a printed text, a 2D barcode, a 3D barcode or an RFID tag. The label may contain the unique identifier, or the unique identifier and the URL of the entity under whose control the container currently is. Navigating to the URL of the entity in combination with the unique identifier returns information about the container which is available in the folder and made accessible by the entity. The unique identifier also serves for monitoring and identification of containers within the controlling entity.

The present invention further provides a method for managing inventory of items which includes the following steps:
- providing an item folder for each individual item, said item folder comprising at least the designation of the item;
- providing a container folder for each individual container, said container folder comprising at least the designation of the container;
- on each physical grouping of a plurality of items into a container, the item folders corresponding to the said items are moved into the corresponding container folder;
- on each physical grouping of a plurality of containers into a higher-level container, the container folders corresponding to the said containers are moved into the corresponding container folder of the higher-level container;
- on each physical division of a plurality of items from a container into two or more sub-groupings, the item folders corresponding to the said items are moved from the corresponding container folder into container folders corresponding to the sub-groupings or into root folder or outbound folder if the sub-groupings are individual items;
- on each physical division of a plurality of containers from a first higher-level container into two or more second higher-level containers, the container folders corresponding to the said containers are moved from the corresponding container folder of the first higher-level container into container folders corresponding to the second higher-level containers, or into root folder or outbound folder if the second higher-level containers are the individual containers.

When the control of items is transferred from a first entity to a second entity, the respective folders corresponding to the items and/or to the container(s) are made available by the first entity to the second entity. The folders may be made available on a URL of the first entity from which the second entity downloads the folders (or part of the folder structure, as needed). The folders may be made accessible by the first entity (e.g., via its URL) also to other entities, e.g. 3^{rd} party entities like carriers. These 3^{rd} party entities, like any entity external to the first entity, may be provided with the folder structure but can have their access to certain more sensitive information from the first entity restricted based on their permissions when accessing the location of information at the first entity. In this way, the folders may be made accessible to the intermediate entities in a way in which only some files within the folders or only some folders in the folder structure may be accessed by the intermediate entities, but the folder structure hierarchy is maintained.

Each item is assigned a unique identifier within the entity having the control of the item. For items or containers which will not leave the entity, like containers or locations, the identifier can be a simple number or letter for easy identification - the identifier shall be unique within the entity. However, for items that will leave the entity, it is advisable to use a randomly generated universal identifier such as a UUID/GUID, which ensures uniqueness of the identifier across different entities.

Each entity is identified by its own domain or subdomain name (URL), which is unique. In some embodiments, this URL is then prepended to the item identifier to generate a universally unique code, which can be used for example within a 2D barcode, a 3D barcode or RFID tag. An entity or a consumer can then use the barcode or the tag to obtain information about the product, but also the text of the final URL + identifier may be a universally unique identifier that in itself identifies the item.

### Brief Description of Drawings

Figure 1 is a generic representation of a possible embodiment of the invention.
Figure 2 is a schematic representation of an embodiment of the invention, useful in a warehouse.
Figure 3 is a schematic representation of the relationship between physical reality and its representation in the system of the invention, in an embodiment useful in a warehouse.
Figure 4 is a schematic representation of an embodiment of the invention, useful in a transport company.
Figure 5 is a schematic representation of the relationship between physical reality and its representation in the system of the invention, in an embodiment useful in a transport company.
Figure 6 is a schematic representation of a process of receiving items into a warehouse, in an embodiment of the present invention.

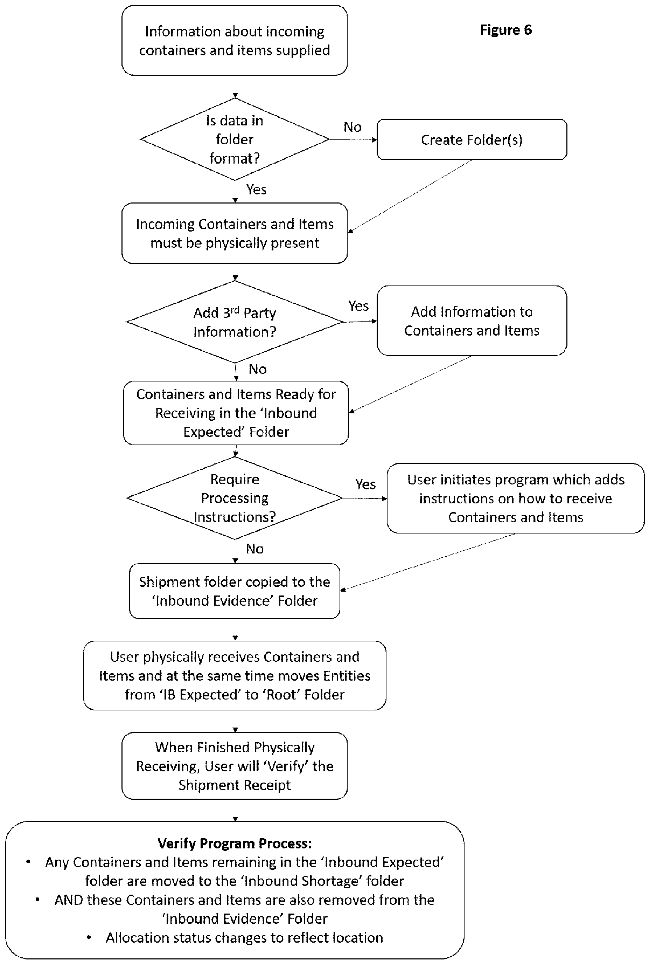

Figure 6 is a schematic representation of a process of receiving containers and items into a warehouse, in an embodiment of the present invention.

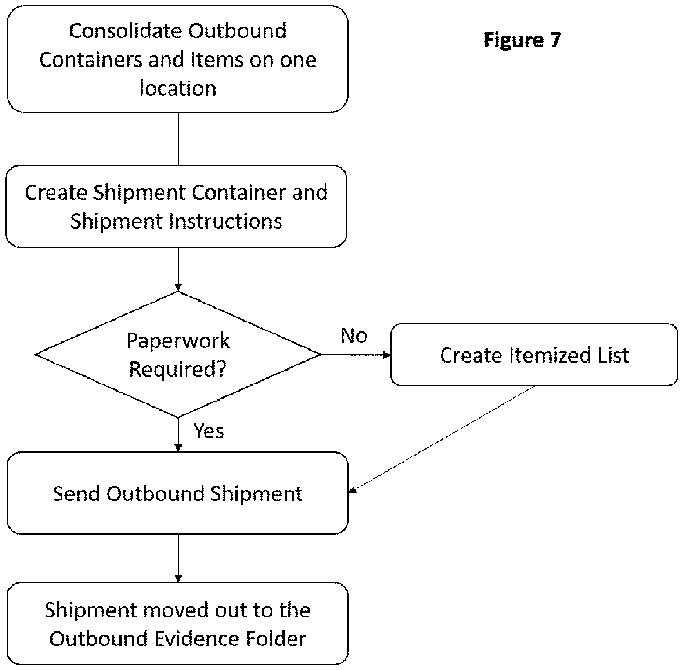

Figure 7 is a schematic representation of a process of sending out outbound containers and items, in an embodiment of the present invention.

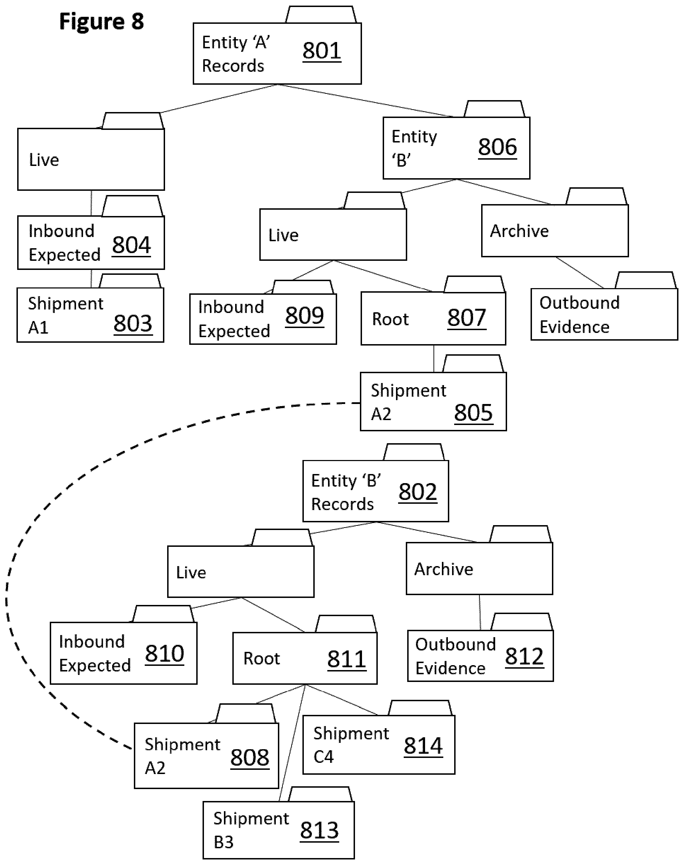

Figure 8 shows schematically a set of relationships between two partners in a transportation embodiment of the invention.

### Detailed description of invention embodiments

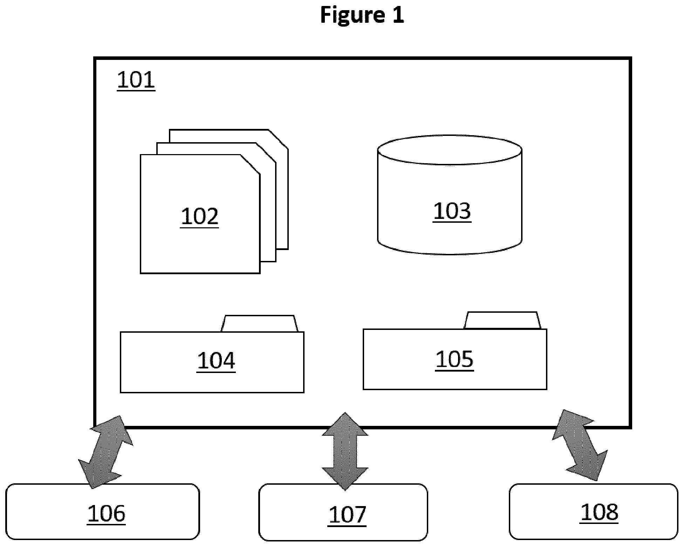

In one preferred embodiment (Fig. 1) of the invention each entity is hosted on a server 101 or shared server where the entity has control of its installation. The server contains programs 102 for creating, reading, modifying and deleting data. For storing data, the server contains a database 103 and a file system 104 which contains configuration files for the entity and one folder 105 that contains folders and files which describe the goods under control of the entity. In the prior art, most information about goods is stored primarily in the database 103, which also is used when appropriate in the present embodiment, but according to the invention it must be supplemented by a file system. Users can interact with the system to create, read, modify and delete data depending on their permissions in the system. Employees 106 can perform many interactions with the system and will have the most permissions. Other interactions can be to read data by retailers or consumers 107 of the product and with partner entities 108 such as customers or contractors.

### Warehouse Embodiment

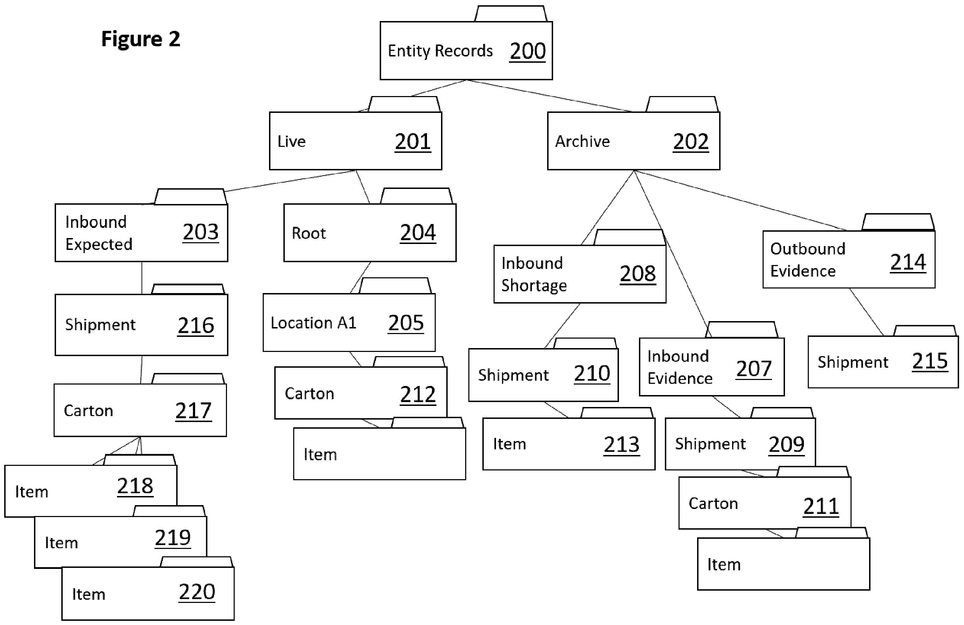

In one preferred embodiment (Fig. 2), the entity is a fulfilment center / distribution center / warehouse which receives goods, stores them, receives customer orders, and subsequently packs and ships these orders from items which it possesses and registers as entity records 200. It can handle containers and items belonging to one or more other entities which may or may not use the container and item folder structure described in this invention. The storage system 105 which contains the folders representing the containers and items can be described as follows.

Within the file system of the entity there are several folders which do not correspond to a container or item but are used for organizational purposes. For this embodiment, the organizational folders are located at the folder level 200 of the entity. These are the Live 201, Archive 202, Inbound Expected 203, Root 204, Inbound Shortage 208, Inbound Evidence 207, and Outbound Evidence 214 folders. These seven folders do not represent containers nor items, however they organize the containers and/or items contained within them.

The Live folder 201 contains containers and items expected to be in the system, and those currently in the system. Importantly, there are no duplicates of containers or items within the live folder. All allocation of items or containers to customers is done while the containers or items are located within the Live folder, its subfolders, or specific subfolders depending on the entity configuration. Found within the Live folder are two more organizational folders, the 'Inbound Expected' folder 203, and the 'Root' folder 204.

All containers and items which are expected to be received into the entity will begin in the Inbound Expected folder 203. The format of the container and item folders should be as described previously in this document. For example, within the Inbound Expected folder 203 there can be a Shipment 216 named 'DFB09EC4-599A-4188-A346-8FB2E0FF16DB'. This Shipment contains a Carton, represented by a folder 217, which can be named 'EE9A74AE-8DF8-4979-8590-9B0CABE40EC0'. It is expected to be received and it contains 3 items, which are represented by folders 218, 219, 220. Locations, Shipments, Cartons, and Pallets are all different container types as described previously. If information is not available in a folder structure with the containers and items being desigated by folders nested in their expected format, these folders can be created by a skilled user or created by a program written by a knowledgeable person.

Information about the expected containers and items expected origin will be added to the file designating the item or container within the item or containers' respective folder. At the moment when the physical containers are received into the entity, the folder representing the container or item is moved from the Inbound Expected folder 203 to the Root folder 204, or directly to the specific folder representing the location (a container type) within the Root folder, in this example Location A1 205. Also, the Shipment folder is left in the Inbound Expected folder, while only the containers and items are moved into the Root folder 204.

The Root folder 204 is the only compulsory organizational folder in the entity, and when all containers and item folders within this folder are counted, then these are all the goods that are controlled by the entity at that moment in time.

The Archive 202 folder serves to keep a record of the containers and items that have been received into the entity, and the containers that have been shipped, in the same folder structure in which they were received or shipped, respectively. It is likely that the containers and items will appear in both the Inbound and Outbound folders after being received, processed and shipped. Therefore, unlike the Live folder 201, the Archive folder 202 will contain duplicate containers and items that are duplicates of others in the entity records 200. Within the Archive folder, the Inbound Evidence folder 207 holds a copy of the container and item folders and designations as they were received or created in the Inbound Expected folder 203. The Inbound Shortage folder 208 holds a copy of the container and item folders and designations as they were received in the Inbound Expected folder 203 but were not received into the Root folder 204.

For example, Shipment 2FE99FC3-B75C-45C6-9FB6-3B6BCA926E39 209 was received into the entity in the past because its folder is located within the Inbound Evidence folder 207, and Carton folders 3EDC68FF-E5F5-4891-8B9C-F4637D697198 211 and 3EDC68FF-E5F5-4891-8B9C-F4637D697198 212 are located in both the Inbound Evidence 207 and the Root folder 204. Additionally, the same Shipment 2FE99FC3-B75C-45C6-9FB6-3B6BCA926E39 folder 210 is specified in the Inbound Shortage folder 208 and contains the Item C5E9C60A-61E7-49F9-B810-5440C8CA2F89 folder 213, which means that this Item 213 was expected to be received but was not. By utilizing the different organizational folders, the entity can identify and record which containers and items were received, are available, and were expected to be received but were not.

Finally, when containers and items are shipped out of the entity, they are in fact moved to the Outbound Evidence folder 214, from where they are accessible to other entities which are permitted to download the Shipment folder and containing folders, for example Shipment 429C8EED-3D40-464D-86A9-0024D1BE0824 folder 215 structure.

### Warehouse Embodiment in the Physical World

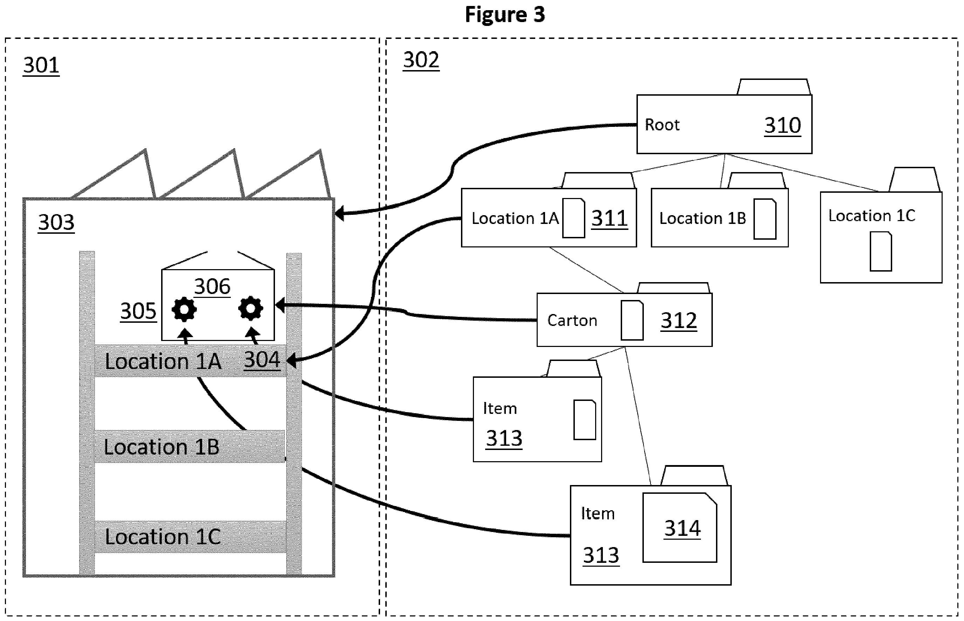

The Root folder 204 contains the containers and items that are under control of the entity. Within this folder, the folders representing the containers and items are organized to be analogous to their real-world physical relationships. Figure 3 depicts how this relationship is represented. The physical reality 301 is a warehouse 303 that contains three locations; 1A 304, 1B, and 1C. On location 1A 304, a carton 305 can be found, which contains two widgets 306. The folder structure representing these elements is an informational model 302. The folders representing the contents of the entire warehouse are found within the folder representation of the warehouse, specifically the Root organizational folder 310. There are three folders representing containers within the root folder. These containers are locations such as Location 1A folder 311. Within the folder 311 representing Location 1A, there is a folder 312 representing the container that is a Carton. Within the Carton folder 312 there are two folders 313 which represent the items. Within each container's and item's folders, there is a file 314 that describes the container or item's history, the classification of the container or item (its taxonomy), and any other information that the entity wishes to specify about the container or item. The name of the file 314 is just the designation, while the folder name is prepended with the container type, such as 'Location' (for 311) or 'Carton' (for 312). When the folder represents an item, it is prepended by the term 'item' (for 313), or its respective item type if applicable. In this way, the structure of what is being represented is much clearer to the user, and the classification of the container or item can be easily ascertained. Additionally, each embodiment can define a system of rules where some container types and item types cannot be contained within others, so that the real-world reality of containers and items is not accidently modified by persons using the system. For example, rules can be created that an item cannot be located on a pallet but must be placed in a carton. Other examples include: A location cannot be placed anywhere except the Root location; or a pallet cannot be placed in a carton. During container or item operational moves, these rules can be validated before the program allows for a move to take place.

The contents of the file designating the container or item can be a file that contains key/value pairs that can be nested within one another, like an XML file 314. In the preferred embodiment, there is an Identification section which states the GUID of the container or item, and can add more information on where to view information about the container or item like a URL, and its label, description, etc. Importantly, there is 'Taxonomy' section. Nested within this section there are different taxonomies that the container or item belongs to and is used for at least two different purposes by the entity in this embodiment; for allocation of containers or items to customer orders, and for reporting purposes to ascertain the amount of containers or items that are currently in various locations in the entity, or in the entity as a whole. There can be a 'History' section included as well. In this section, the various entities which handle the containers or items can add in information about their handling of the containers and/or items, including their role in handling the containers and / or items, the environmental impact their production, processing, transport activities had that can be attributed to the container or item in question.

### Transport Embodiment

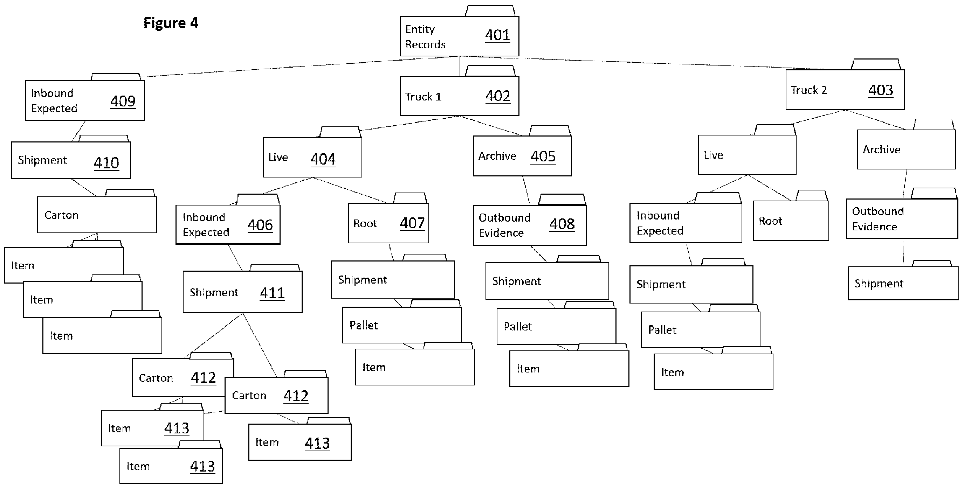

While the aforementioned embodiment concentrated on the application of this invention to a warehouse, a second preferred embodiment exists within the transportation sector, for example, a transport company with two trucks that pick up and deliver shipments. The folder structure of this embodiment is depicted in Figure 4. One significant difference in this embodiment to the first embodiment is that the organizational folders are not located at the level of the entity records 401 but are located within the folder structure of the folders 402, 403 representing the trucks. The trucks are a container type. In this embodiment, the Live 404, Archive 405, Inbound Expected 406, Root 407 and Outbound Evidence 408 organizational folders are located within each folder representing a truck container type. Additionally, there is an extra Inbound Expected 409 that is at the level of the entity. This is because the transport company will receive requests for movements that their trucks must perform, and at the company (entity) level, these requests can be stored somewhere before they are assigned to a particular truck to perform. When a dispatcher in the trucking company decides that Truck 1 (folder 402) will be the truck that will perform the work required to deliver Shipment E1C59B71-D4D0-4452-BC8C-4476EF826433, represented by a folder 410, then the dispatcher will move this Shipment folder to the Truck's Inbound Expected folder 406. As described previously in the first embodiment, Shipment folders that are under control of the entity, and the Truck in particular, are moved to the Root folder 407, which in this instance is when the shipment has been picked up. However, unlike the first embodiment, the Archive folder 405 is missing the Inbound Evidence 207 and Inbound Shortage 208 folders. This is because a transport company will typically not open a shipment and re-package its contents, so a record of trips completed will be kept within the Outbound Evidence folder 408, and this is likely adequate record-keeping for the majority of transport companies. Specifically, a transport company may or may not have information about the contents of the shipment. A shipment can be described using the concept of containers and items as described in this entity, with a Shipment folder 411, Carton folders 412 belonging to this Shipment, and the Item folders 413 contained within the Carton folders. Alternately, the Shipment folder 411 can contain a packing list which is provided by the shipper and not have any detail on the contents of the shipment.

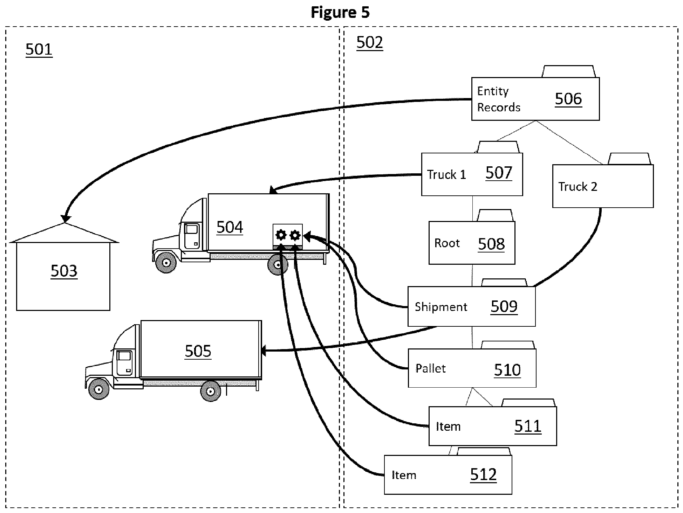

The physical reality of the transport company 501, the entity shown in Figure 5, can be depicted as an office 503 and two trucks 504 and 505. The entity records 506, which can be analogous to the office 503 holds all of the folders representing containers and items, as well as organizational folders, for this entity. The Truck folders 507 representing the trucks are located within the entity records 506. Within each Truck folder, the organizational folders 508 are located, and the Root folder, as in the previous embodiment, contains folders which represent the containers and items that are under under control of the entity. Truck 1 folder 507 contains one container folder, Shipment 509, which consists of a single Pallet folder 510, in which are two item folders 511 and 512.

### Methods of Receiving and Transferring Possession of Containers and Items

To effectively take control of containers and items, an entity can follow the following method which keeps information about the provenence of the containers and items with those respective containers and items as they are received into the entity. As this process requires the most detail when receiving into a warehouse where the items are re-packaged into orders, so the process described below (in Figure 6) will concentrate on receiving into a warehouse (of Figure 2).

Information about the goods which are being accepted into the entity are supplied, which can be from a party like the shipper. If the data is not in the folder format required by the embodiment, then the container and item folders can be created by a program 102 in the entity from a document like a packing list. At this point in time, the containers and items must be physically present at the entity. Then, as the goods are being physically received into the warehouse, third party information about the containers and items can be supplied by the Carrier, and this can be added to the container and items folders. This could be simply the shipment history, or the Greenhouse Gas emissions that can be attributed to each container and item in the incoming shipment.

At this point, the container and item folders that are to be received exist within the Inbound Expected organizational folder. In the preferred embodiment like a warehouse, then the containers and items will require processing instructions, which direct the workers in the warehouse where to place the containers and items. These can be created by a program at this point.

Before the first entity from the shipment is moved from the Inbound Expected folder 203 to the Root folder 204 by the users, the entire Shipment folder is copied to the Inbound Evidence folder 207. This is to record what was expected to be received. After this is done, a warehouse worker can receive the individual containers and items into the entity. This is done by using a program to move the container and item folders into the Root folder 204. This program is initated by the warehouse worker as he or she is physically receiving each container and item into the warehouse's possession.

After both the warehouse and carrier are satisfied that the receipt is complete, the shipment can be verified by the warehouse worker. This initiates the verify program. The purpose of this program is to identify discrepancies found during the receiving process and to change the allocation settings of the containers and items if this is used by the entity. Any containers and items folders remaining in the Inbound Expected folder 203 related to the shipment are moved to the Inbound Shortage folder 208. These same container and item folders that were just moved are deleted from the Inbound Evidence folder 207. The result is that folders of any containers or items expected to be found in a Shipment but were not will be listed separately in the Archive Folder 202. Any unexpected containers and/or items found during receipt can be processed under a new inbound shipment. Each container and/or item within an entity can also be assigned an allocation status. At the time of verification, the allocation status can be changed to show that that the containers and/or items are now within the control of the entity. The allocation status can be stored in a file 314 in the folder designating the container or item.

To send containers and items out of the entity (process schematically shown in Fig. 7), first the containers and items must be located on one location in the Root folder 205. The user can initiate a program which creates the shipment container and shipment instructions for all containers and items located on the one selected location. If paperwork is required for the carrier then this can be created by a program which can generate an itemized list of containers and items and email or print this information as configured. The Outbound Shipment container is 'Sent' by a warehouse worker initiating a program. This program will move the folder representing the Shipment from the specified Location in the Root Folder to the Outbound Evidence folder 214. This movement confirms that the containers and items are no longer within the control of the entity.

### Relationships between Entities

Having relationships between different businesses that function as the defined entities in the supply chain is extremely common. For example, web retailers often use a 3^{rd} party warehouse to fulfil their goods. Carriers often use independent drivers and their trucks to move goods for the carrier's customers. Across the supply chain, there is a consistent requirement to work with multiple partners and provide limited information to each partner, which is limited to information about each respective partner's containers and/or items. For each physical container and/or item that exists in the entity, the entity can choose to publish or make available to another entity, all or some of the information about that container or item. This information can be shared to others based on information stored in the folder 313 designating the container or item within a file 314. This file can contain a specification of the 'owner' of the container or item. The information can be shared according different methods that are available to the skilled person. In addition to the information within the container folder designating the container, the entity can add other information relevant to the folder to the transfer of information. This could include the location of the folder designating the container or item, as whether the folder representing the container or item is located within the Inbound Expected or Root folder can be of interest to the owner.

Figure 8 shows a hypothetical set of relationships between two partners in a transportation embodiment of the system. Entity 'A' is a re-seller (broker) of transportation services. Entity 'B' is a carrier which actually moves shipments from one physical address to another. Entity 'A' has a server with records 801 and Entity 'B' has a server with records 802. Entity 'A' is moving a Shipment for a customer, represented by a folder named Shipment A1 803. This shipment has not yet been assigned to a carrier, and this is represented by its folder's location within the Inbound Expected folder 804. Entity 'A' is also brokering a second shipment, represented by a folder named Shipment A2 805, which is currently being delivered by Entity 'B', and this is represented the folder's location on Entity 'A's server 801, nested within the Entity 'B's 806 Root 807 folder on Entity 'A's server. Importantly, the folder representing Shipment A2 805 is duplicated into Entity 'B's server 802, which also contains a folder representing Shipment A2 808. Any information added by Entity 'A' to the folder representing Shipment A2 805 is then updated within the folder representing Shipment A2 808 on Entity 'B's server 802. Additionally, any movements of the folder representing Shipment A2, on either server (805 or 808) will be communicated to the other server and updated.

By updating the location of the Shipment folder on the opposing server, both servers will have up-to-date information on the status of each Shipment. For instance, when a Shipment has been ordered by Entity 'A's external customer but has not yet been assigned to a carrier, it is located in Entity 'A's Inbound Expected folder 804, when Entity 'A' assigns the Shipment to Entity 'B' to pick up, the folder representing the Shipment is located into the Inbound Expected folder for Entity 'B' on 'A's server 809. At this point, the Shipment folder will also be copied into Entity 'B's server, and into its Inbound Expected folder 810. When Entity 'B' picks up the Shipment from its point of origin, then the Shipment Folder will be moved by Entity 'B' into its Root Folder 811, and this folder movement will be instructed by Entity 'B' to take place on Entity 'A's server as well, by movement of the Shipment folder into the appropriate Root folder 807. When Entity 'B' delivers the Shipment to its destination, then the Folder representing this Shipment will be moved into the Outbound Evidence folder 812, and again this movement will be instructed to take place in Entity 'A's records.

It is important to note that Entity 'B' is also currently delivering Shipments B3 and C4, represented by folders 813 and 814, respectively. However, as these two Shipments have not been brokered to Entity 'B' by 'A', so they are not copied into the folder representing Entity 'B' on Entity 'A's server 806. A benefit of this arrangement is that indirect information about the work done by Entity 'B' can be shared without exposing information about its other relationships. This is useful for carbon accounting, for example, carbon emissions attributed to Entity 'B's movements can be divided by 3 to account for the presence of 3 shipments within the truck. And these emissions are reported to Entity 'A' by Entity 'B' recording this information within folder representing a Shipment, like Shipment A2 (808 and 805). Entity 'A' has the benefit of having correct carbon accounting information as the emissions corresponding to Shipment A2 are reported proportionally to the total number of shipments on the truck, but Entity 'B' does not expose information about shipments belonging to its other customers to Entity 'A'.

In a transportation embodiment of the system, it is pertiant to share information about the status of a shipment that belongs to a different owner, however in a 3^{rd} party warehousing embodiment, allocating the proper item to a final consumer order is equally important. This is because each warehouse embodiment can have one or more customers who are the corresponding owners of different 'inventories' of items within the one physicial warehouse. Assuming, for example, a 3^{rd} party warehousing embodiment which fulfills orders for 2 different Eshops, 'A' and 'B'. The items belonging to each Eshop will be of a different type, and each item type has its own taxonomy for allocation. This will allow for Eshop A to send an order with their taxonomy for classification, and only those items which are of item type 'Item_A' will be considered for allocation to fill the order for Eshop A. The same would be true for Eshop B and 'Item_B'.

### Detail on use in Point of Sale systems

Current common Retail Point of Sale systems link a type of product to a price, so that during checkout this amount is added to the consumer's bill. This assumes that each item is labelled with a number or barcode which designates the type of product. Items labelled within the methods of the current invention can also have their label associated with a price so that when the item is being purchased, it can be billed appropriately. Because each label is unique, then a centrally controlled system of allocating numbers to different businesses is not required.

A retail organization can either use the unique URL+GUID label to identify the Item and prepare it for use at the time of purchase by entering it into their own master data as a barcode with an associated price before the time of purchase. Then, at the time of purchase, this barcode is read from their internal system. Alternately, the entity that processed and labelled the Item can agree to list the retail price within the response to a query to that URL+GUID address over the internet. For the second method described, the Point of Sale system can obtain the retail price to be charged from the entity's website at the time of purchase. In this way, re-labelling the item for retail checkout is not necessary.

## Claims

1. A system for managing inventory of items, wherein
- the system contains a plurality of entities, wherein at least one entity controls at least one item,
- the system contains at least one item folder, wherein one item folder corresponds to one item, and said item folder and said corresponding item are designated by a unique identifier,
- the system contains at least one container folder, wherein one container folder corresponds to one container, and said container folder and said corresponding container are designated by a unique identifier,
- each entity has means for creating a folder structure corresponding to physical grouping of item(s) and/or container(s),
- each entity is equipped by means for making accessible to other entities at least one item folder corresponding to an item, or at least one container folder corresponding to a container, said item or said container being controlled by the entity,
- each entity has means for adding a file containing information about handling of an item by the entity into the item folder, optionally also a file containing an information about handling of a container by the entity into the container folder.

2. The system according to claim 1, wherein at least one item has an item inventory and is composed of several sub-items.

3. The system according to any one of claims 1-2, wherein the item folder contains at least one file, and the files contained in the item folders include a file containing generic name of the item and/or information about the producer and/or production of the item and/or production date of the item, a file containing information about the origin of the item and/or raw materials, at least one file containing information about shipping(s) and or transport(s) undergone by the item, at least one file containing information about storage(s) of the item, at least one file containing information about change(s) of ownership of the item, at least one file containing information about repair(s) of the item, a file containing an item inventory.

4. The system according to any one of claims 1-3, wherein each item identifier and each container identifier is unique globally.

5. The system according to any one of claims 1-4, wherein the folders and files are electronic, said system having the following features:
- the system contains the plurality of entities, each entity having or corresponding to a memory which contains item folder(s) and/or container folder(s) corresponding to item(s) and/or container(s) which are presently under control of the entity;
- each entity has a URL which can be made accessible to other entities;
- each entity has a means for making accessible to other entities via the URL of the said entity at least one item folder corresponding to an item, or at least one container folder corresponding to a container, said item or said container being controlled by the entity;
- each entity has a means for adding a file containing an information about handling of an item by the entity into the item folder, optionally also a means for adding a file containing an information about handling of a container into the (root of the) container folder.

6. The system according to claim 5, wherein the memory of an entity contains item folder(s) and/or container folder(s) corresponding to item(s) and/or container(s) which are under control of the entity, and optionally item folder(s) and/or container folder(s) corresponding to item(s) and/or container(s) which were under control of the entity in the past or are leaving the control of the entity, and which are expected to come under control of the entity.

7. The system according to claim 5 or 6, wherein folder structure in the memory of an entity is divided into organizational folders, such as organizational folders "presently under control", "inbound / to be picked up", "outbound / dropped off".

8. The system according to any one of claims 5-7, wherein a container folder contains folders of inbound and/or outbound items or inbound and/or outbound lower-level containers, and optionally the container folder structure is divided into organizational folders, such as organizational folders "presently under control", "inbound", "outbound".

9. The system according to any one of claims 5-8, wherein the entity has a means for making available on their URL item folder(s) and/or container folder(s) of the containers and/or items which are expected to leave the control of the entity and/or which are expected to come under control of the entity.

10. The system according to any one of claims 5-9, wherein only some files contained in the folders are made available to other entities.

11. The system according to any one of claims 5-10, wherein at least one item is labelled by a label with the unique identifier, said label preferably having the form of a printed text, a 2D barcode, a 3D barcode or an RFID tag.

12. The system according to any one of claims 5-10, wherein at least one container is labelled by a label with the unique identifier, said label preferably having the form of a printed text, a 2D barcode, a 3D barcode or an RFID tag.

13. The system according to claim 11 or 12, wherein the label contains the unique identifier, or the unique identifier and the URL of the entity under whose control the item currently is.

14. A method for managing inventory of items which includes the following steps:
- providing an item folder for each individual item, said item folder comprising at least the designation of the item;
- providing a container folder for each individual container, said container folder comprising at least the designation of the container;
- on each physical grouping of a plurality of items into a container, the item folders corresponding to the said items are moved into the corresponding container folder;
- on each physical grouping of a plurality of containers into a higher-level container, the container folders corresponding to the said containers are moved into the corresponding container folder of the higher-level container;
- on each physical division of a plurality of items from a container into two or more sub-groupings, the item folders corresponding to the said items are moved from the corresponding container folder into container folders corresponding to the sub-groupings or into root folder or outbound folder if the sub-groupings are individual items;
- on each physical division of a plurality of containers from a first higher-level container into two or more second higher-level containers, the container folders corresponding to the said containers are moved from the corresponding container folder of the first higher-level container into container folders corresponding to the second higher-level containers, or into root folder or outbound folder if the second higher-level containers are the individual containers.
